Europäisches Patentamt

European Patent Office

Office européen des brevets

(11) Numéro de publication: **0 360 945 B1**

(19)

(12) **FASCICULE DE BREVET EUROPEEN**

(45) Date de publication de fascicule du brevet: **17.03.93**   (51) Int. Cl.5: **C05F 3/00**, C12N 1/20,
                                                            //(C12N1/20,C12R1:425,1:22)

(21) Numéro de dépôt: **88402473.8**

(22) Date de dépôt: **30.09.88**

(54) **Procédé de valorisation des lisiers de porc et dispositif pour sa mise en oeuvre.**

(43) Date de publication de la demande:
**04.04.90 Bulletin  90/14**

(45) Mention de la délivrance du brevet:
**17.03.93 Bulletin  93/11**

(84) Etats contractants désignés:
**AT BE CH DE ES FR GB GR IT LI LU NL SE**

(56) Documents cités:
**EP-A- 0 077 856          EP-A- 0 099 052**
**DE-C- 831 399            FR-A- 2 180 992**
**FR-A- 2 192 081          FR-A- 2 546 161**

**CHEMICAL ABSTRACTS, vol. 99, no. 7, 15
août 1983, page 252, résumé no. 50098c,
Columbus, Ohio, US; A.M. DESCHAMPS et
al.: "Bacteriology and nutrition of environmental strains of Klebsiella pneumoniae involved in wood and bark decay".**

**CHEMICAL ABSTRACTS, vol. 90, no. 12, 19
mars 1979, page 267, résumé no. 91855e,
Columbus, Ohio, US; Kh. DILOV et al.: "Algal,
microbiological, and biochemical characteristics of waste waters of stock-breeding
farms".**

**CHEMICAL ABSTRACTS, vol. 83, no. 3, 21
juillet 1975, pages 409,410, résumé no.
26880a, Columbus, Ohio, US; & JP-A-75 18
252 (MITSUBISHI METAL CORP.) 26-02-1975**

(73) Titulaire: **ECOLISE**
**2, Boulevard du Jeu de Paume**
**F-3400 Montpellier(FR)**

(72) Inventeur: **Biez, Georges**
**Mas Valencia Route de Clermont l'Herault**
**F-34600 Bedarieux(FR)**

(74) Mandataire: **Gillard, Marie-Louise et al**
**Cabinet Beau de Loménie 55, Rue d'Amsterdam**
**F-75008 Paris (FR)**

Il est rappelé que: Dans un délai de neuf mois à compter de la date de publication de la mention de la
délivrance du brevet européen, toute personne peut faire opposition au brevet européen délivré, auprès de
l'Office européen des brevets. L'opposition doit être formée par écrit et motivée. Elle n'est réputée formée
qu'après paiement de la taxe d'opposition (art. 99(1) Convention sur le brevet européen).

## Description

La présente invention a pour objet un procédé de valorisation des lisiers de porc et un dispositif pour sa mise en oeuvre.

Le procédé selon l'invention permet, à partir desdits lisiers de porc, l'élaboration d'amendements biologiques, utilisables en agriculture.

Le lisier de porc est en soi une matière fertilisante très riche.

Toutefois, son utilisation brute -épandage tel que ou après atomisation- n'est pas sans danger pour les terres et les nappes phréatiques.

En effet, les lisiers de porc contiennent d'une part des bactéries pathogènes et, d'autre part, des substances polluantes, telles que des nitrites, nitrates, du cuivre... De plus, ils dégagent une odeur très désagréable.

Selon l'invention, on propose un procédé qui permet, d'une part, de neutraliser les effets néfastes du lisier, évoqués ci-dessus et d'autre part, de valoriser celui-ci en le transformant en un compost utilisable comme n'importe quel compost organique.

Cette transformation peut être mise en oeuvre, selon l'invention, dans un délai étonnament court.

De tels résultats sont obtenus par la fermentation d'une biomasse à base d'un mélange de lisier de porc et d'un support carboné dans des conditions particulières.

Le procédé selon l'invention fait intervenir pour la fermentation, une sélection bactérienne spécifique. Il est avantageusement mis en oeuvre pour assurer des conditions de travail optimales aux bactéries de cette sélection.

Selon l'invention, la biomasse -lisier + support carboné-est ensemencée par une sélection bactérienne comprenant Serrathia et Kloebsiela.

Ces bactéries appartiennent à la famille des enterobacteriaceae, elles sont 100 % Gram⁻.

Elles ont été choisies pour leurs propriétés intrinsèques, mais se sont révélées -conjuguées- étonnament performantes, tant au niveau du déroulement du procédé de l'invention, qu'au niveau de l'utilisation du produit obtenu par ce procédé.

Il s'agit de bactéries réversibles, susceptibles de travailler aussi bien en milieu aérobie, qu'en milieu anaérobie. Elles attaquant la matière organique et sont notamment capables de réduire les nitrates en azote gazeux.

De plus, elle présentent une résistance thermique qui autorise leur utilisation vers 70°C.

La biomasse, traitée selon le procédé de l'invention, doit être soumise à de telles températures (jusqu'à 72°C), pour d'une part, débarrasser le lisier de ses bactéries pathogènes et, d'autre part, entamer le processus d'humification d'au moins une partie du support carboné.

Selon l'invention, on a donc sélectionné cette paire de bactéries.

Celles-ci sont disponibles dans le commerce. Elle peuvent intervenir, selon des variantes de l'invention, en combinaison avec d'autres mais se révèlent à elles seules suffisamment performantes.

Elles interviennent avantageusement en quantités égales.

La biomasse à ensemencer, selon le procédé de l'invention, est, comme précisé ci-dessus, à base d'un mélange de lisier de porc et d'un support carboné.

Le lisier est un liquide, dégageant une odeur nauséabonde et comprenant généralement de 12 à 15 % de matières sèches.

Selon une variante préférée du procédé de l'invention, il est, avant son mélange avec le support carboné, mis en suspension. On fait intervenir pour sa floculation un colloïdal.

Ce colloïdal ou floculant assure la mise en suspension des particules solides et emprisonne, piège, retient l'odeur.

Il peut être choisi, par exemple, parmi les alginates, la carboxyméthylcellulose, la levure de bière, l'amidon de riz, l'amidon de maïs...

Avantageusement, on choisira un colloïdal naturel qui constituera une réserve de nourriture pour les bactéries, lors de leur utilisation (réveil) dans les sols.

L'amidon de maïs éclaté est préféré puisqu'il s'agit d'un colloïdal naturel, relativement bon marché et qui agit à température ambiante.

L'intervention d'amidon de maïs non éclaté impliquerait une cuisson du lisier vers 40-45°C.

Le lisier, avantageusement floculé- qui se présente alors sous l'aspect d'un liquide gluant dont l'odeur a quasiment disparu-est mélangé avant ensemencement à un support carboné.

Le mélange contient de 55 à 65 % en poids de lisier -à 12-15 % de matières sèches- pour 35 à 45 % en poids de support carboné.

Le support carboné est généralement à base de paille. On peut utiliser tout type de paille : de la paille proprement dite, de la paille de maïs, du foin, voire des branches d'arbres...

Ledit support carboné peut consister uniquement en ladite paille. Il peut également consister en un mélange de paille et de sciure de bois vert, par exemple.

Le mélange -lisier, support carboné- peut constituer la matière première -biomasse- nécessaire à la mise en oeuvre du procédé de l'invention. Toutefois, pour l'élaboration d'amendements biologiques performants, on fera avantageusement intervenir dans le procédé de l'invention, d'autres matières premières assurant un apport en substances minérales, en A-P-K.

Selon l'invention, on fait intervenir ces autres matières premières, qui assurent notamment l'apport en phosphates, potasse avant l'ensemencement. Ainsi, lesdites matières premières seront intégrées, fixées par les bactéries au support carboné, notamment la paille. Le travail desdites bactéries rend ces matières non lessivables.

Ces matières premières, incorporées avant l'ensemencement, ne doivent toutefois pas géner le travail des bactéries, en modifiant notamment le pH du milieu. C'est pourquoi, on ne fait intervenir dans le procédé selon l'invention, que des produits naturels.

De tels produits consistent avantageusement en :

- du plâtre fin de construction (A) : ledit plâtre est polyvalent. Il intervient tant au niveau de la fabrication de l'amendement qu'au niveau de son utilisation dans les sols. Il assure des fonctions de liaison, de temporisation... Il contribue aussi à l'emprisonnement de l'odeur du lisier ;
- du phosphate naturel calciné (P) ;
- de la potasse naturelle (K) ;
- du carbonate de calcium, de préférence magnésien.

Ainsi, selon une variante préférée de l'invention, on répartit au sein du support carboné, avant son mélange avec le lisier, du plâtre fin de construction, du phosphate naturel calciné, de la potasse naturelle et du carbonate de calcium, de préférence magnésien ; ces quatre produits intervenant en quantités égales, leur quantité totale représentant de 10 à 25 % en poids du mélange lisier - support carboné.

Ces quatre produits peuvent, selon une autre variante, être ajoutés au mélange lisier - support carboné préalablement réalisé.

La biomasse ainsi obtenue -lisier + support carboné + éventuellement substances minérales- est, selon l'invention, soumise à un traitement thermique avant son ensemencement. Elle est portée à environ 70°C.

Ce traitement thermique assure la concentration du lisier, le séchage partiel de la biomasse avant son ensemencement et commence à détruire les bactéries pathogènes qu'elle contient.

Le taux d'humidité de la biomasse obtenue doit être voisin de 40 % -38 à 43 %-.

Un tel taux d'humidité de la biomasse permet, au cours de la fermentation, un travail optimum des bactéries.

La biomasse est ensemencée avec Serrathia et Kloebsiela, en solution aqueuse, par pulvérisation.

Les bactéries lyophilisées sont sur des supports, par exemple à raison de $6.6\ 10^8$ germes/gramme. On introduit environ 200 à 300 g de tels supports pour une tonne de biomasse à 40 % d'humidité. L'intervention d'une quantité plus importante de bactéries n'est pas gênante.

Au cours de l'incubation, la température de la biomasse atteint 72°C. Les bactéries pathogènes du lisier ne résistent pas à cette température.

Lorsqu'en cours d'incubation, la biomasse redescend en phase mésophile, elle est oxygénée. Elle n'est que séquentiellement oxygénée pendant un court instant.

L'incubation doit durer suffisamment longtemps pour tuer toutes les bactéries pathogènes, pour humifier quelque peu le support carboné. Elle ne doit pas toutefois engendrer des pertes de protéines.

Le procédé de l'invention permet l'obtention d'une biomasse intéressante au bout de 10 à 15 jours. Au bout de 12 jours, celle-ci est généralement d'une qualité optimale.

Ce résultat est particulièrement surprenant puisque l'élaboration d'engrais organiques prend généralement beaucoup plus de temps.

La biomasse obtenue, vivante, est avantageusement dirigée selon le procédé de l'invention vers un granulateur à pression. Ce traitement permet d'endormir les bactéries et d'obtenir un produit plus facile à stocker et à distribuer dans les terres.

La compression est à mettre en oeuvre sur la biomasse à environ 15-18 % d'humidité. Au bout des 10-15 jours d'incubation de la biomasse à 40 % d'humidité, on obtient une telle biomasse. En exerçant 70 à 80 bars sur celle-ci, on obtient le résultat attendu sans échauffement superflu. En effet, il convient de ne pas tuer les bactéries en portant, par compression, la biomasse à une température excessive.

La biomasse est alors obtenue sous forme de granulés. Répandus dans le sol, ces granulés se délitent. Les bactéries endormies se réveillent alors et commencent à travailler.

Selon l'invention, on propose donc un procédé qui, à partir d'un produit très polluant -lisier de porc- permet l'élaboration d'un amendement vivant, riche (présentant un N-P-K valable) et non lessivable.

Ledit amendement est exempt de microbes nocifs, il est également avantageusement exempt d'odeur.

Ces résultats sont obtenus grâce à l'intervention de bactéries spécifiques.

Selon un autre objet de la présente invention, on propose un dispositif pour la mise en oeuvre du procédé décrit ci-dessus.

Ce dispositif comporte :
- un mélangeur, alimenté d'une part en lisier floculé et, d'autre part, en support carboné ;
- un sécheur à lit fluidisé, avantageusement muni d'un dispositif de récupération des fines, pour soumettre le mélange -lisier, support carboné- à un traitement thermique ;
- une enceinte de pulvérisation d'une solution contenant les bactéries sur le mélange ;
- des réacteurs ou emplacements de fermentation munis d'un dispositif d'oxygénation ;
- une presse à granuler rotative.

Au niveau du mélangeur, il intervient avantageusement les produits naturels assurant l'apport en phosphate, potasse...

Un tel dispositif permet la mise en oeuvre du procédé selon l'invention et donc l'obtention en un délai très court d'un amendement biologique riche, sans odeur, non lessivable, propre (exempt de bactéries pathogènes).

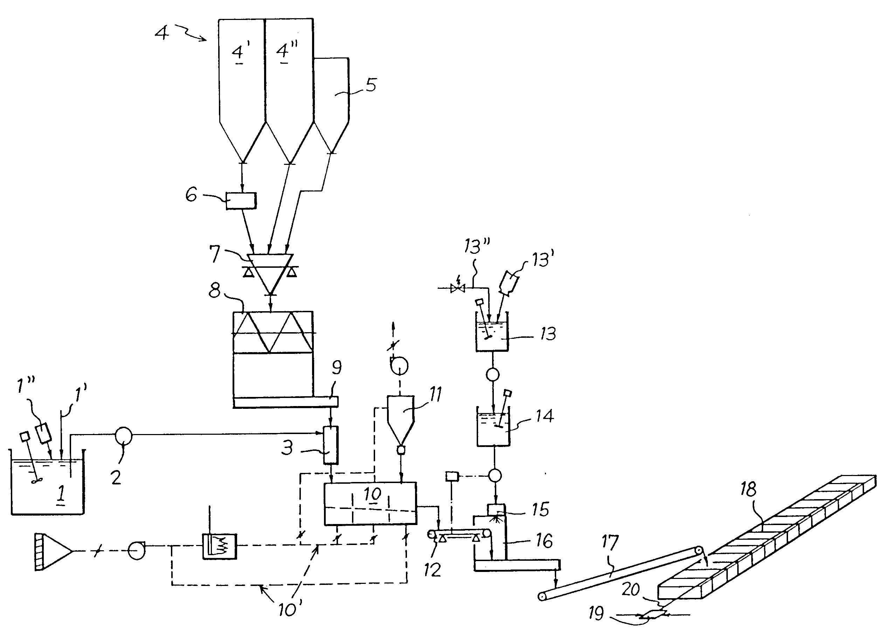

D'autres caractéristiques et avantages de l'invention seront mieux compris à la lecture de la description qui va suivre et en se référant à l'unique figure annexée, sur laquelle on a schématisé un dispositif pour la mise en oeuvre du procédé selon l'invention.

On prépare dans la cuve à lisier (1) une suspension de lisier de porc. On a amené en (1') le lisier contenant entre 12 et 15 % d'extrait sec et en (1'') de l'amidon de maïs éclaté. On peut ainsi obtenir, à température ambiante, une suspension dudit lisier.

On a stocké en (4) le support carboné et en (5) le supplément de substances naturelles que l'on souhaite incorporer dans le mélange à composter. Plus précisément, on a stocké en (4') de la paille, en (4'') dela sciure de bois vert et en (5) un mélange à parts égales de plâtre fin de construction, de phosphate naturel calciné du Sénégal, de potasse naturelle (patenkali) et de carbonate de calcium magnésien.

En (6), la paille est émiettée.

En (7), on a schématisé une trémie peseuse permettant l'élaboration du mélange : paille, sciure, supplément naturel, plus précisément l'élaboration de la quantité voulue de support carboné enrichi en APK.

Ledit support carboné enrichi est, grâce à l'alimenteur (9) introduit dans le mélangeur vertical (3) pour y être mélangé au lisier floculé, amené, lui, par l'intermédiaire de la pompe (2).

A titre d'exemple, on peut indiquer que 600 l de lisier mis en suspension par addition en leur sein de 3 kg d'amidon de maïs éclaté, sont mélangés à :
- 400 kg de support carboné constitué d'environ 320 kg de paille (80 %) et 80 kg de sciure de bois vert (20 %) ; et
- 200 kg d'apport en APK.

Le mélange homogène obtenu est dirigé vers un séchoir (10) à lit fluidisé. En (10'), on a schématisé l'arrivée d'air chaud. A l'intérieur du séchoir (10), on distingue 3 zones de température : la première à environ 70°C, la seconde à environ 60°C, la troisième vers 35-40°C. Les paramètres du chauffage sont déterminés pour qu'à la sortie dudit séchoir, le produit final soit à environ 40 % d'humidité. On réalise au cours de ce traitement thermique une concentration du lisier et la destruction des bactéries pathogènes qu'il contient. En (11), on a schématisé un dispositif de récupération des fines, en (12), un tapis roulant équipé d'une tremis peseuse.

Le mélange à 40 % d'humidité est ensemencé dans l'enceinte (16) de rétention bactérienne.

La sélection bactérienne (13') est diluée dans de l'eau (13'') à 33-35°C en (13). Le liquide bactérien est stocké en (14). En (15), on a schématisé son dispositif de pulvérisation.

On précise, à titre d'exemple, les quantités intervenant : 250 g de bactéries lyophilisées avec leur support, diluées dans 5 l d'eau, sont prévues pour une masse d'une tonne (1 000 kg de produit à 40 % d'humidité). Sur ledit support (sciure + protéines), on trouve environ $6.6\ 10^8$ germes/gramme.

Le mélange ensemencé est dirigé en (17) vers des réacteurs ou des andins (18) (tas longitudinal ayant une largeur d'environ 1 m et une hauteur de 80 cm).

Ces réacteurs ou andins (18) sont équipés d'un dispositif d'oxygénation (20) alimenté en (19) par un mélange d'oxygène et d'air, réchauffé à 35°C.

L'oxygénation a lieu pendant une durée de 2 minutes toutes les fois que la biomasse descend en phase mésophile (38-33°C).

L'incubation de la biomasse se déroule de la façon suivante : en environ 8 à 9 heures, elle monte en phase thermophile (par une température extérieure de 15 à 18°C, la température au sein de la biomasse varie entre 60 et 72°C). Cette phase thermophile dure entre 48 à 72 heures Ensuite, la biomasse commence à descendre en phase mésophile et c'est alors qu'intervient l'oxygénation.

Sitôt l'oxygénation terminée, la biomasse remonte en phase thermophile ... etc...

La durée d'incubation de la biomasse a été limitée à 12 jours.

A l'issue de celle-ci, la biomasse -vivante- est dirigée vers un granulateur à pression : presse à granuler rotative. Les bactéries sont endormies par compression à environ 70-80 bars. On obtient des petits granulés qui peuvent être facilement stockés et aisément distribués dans les terres.

L'engrais organique, ainsi obtenu dans un délai très court (12 à 15 jours) à partir de lisier de porc, n'a plus d'odeur, ne contient plus de bactéries pathogènes et se révèle particulièrement performant. En effet, il présente un N-P-K valable, susceptible d'être utilisé au mieux car ledit engrais n'est pas lessivable.

On propose ci-après les résultats d'une analyse sur les germes indicateur de contamination fécale et la microflore totale :

## TABLEAU 1

### Résultats analytiques concernant la recherche des germes indicateur de contamination fécale et de la microflore totale.

|  | lisier | Produit final |
|---|---|---|
| Coliformes fécaux (E.c) | $1,65.10^8/l$ | non détecté |
| Streptocoques fécaux | $5,5 .10^8/l$ | $4.8.10^3$ |
| Microflore totale | $6.10^9/l$ | $1,32.10^{11}$ |

Après seulement 12 jours, la totalité des coliformes fécaux a disparu et la densité des streptocoques fécaux est réduite d'un facteur 6. Ce résultat est remarquable car il autorise l'épandage de la poudre après seulement une quinzaine de jours. L'augmentation de température lors des processus fermentaires est probablement la cause de cette mortalité des bactéries de la contamination fécale. Par contre, la microflore totale s'est considérablement multipliée grâce aux composés organiques du mélange attestant la mise en place d'une biomasse vivante.

L'engrais organique obtenu selon l'invention peut servir à la fertilisation des sols arides, à la régénération des sols épuisés soit par des cultures intensives, soit par l'utilisation excessive ou simplement prolongée des engrais de synthèse.

EP 0 360 945 B1

**Revendications**

1. Procédé de valorisation des lisiers de porc par élaboration d'amendements biologiques, ledit procédé comprenant la fermentation d'une biomasse à base d'un mélange de lisier de porc et d'un support carboné, caractérisé en ce que ladite biomasse est ensemencée par une sélection bactérienne comprenant Serrathia et Kloebsiela.

2. Procédé selon la revendication 1, caractérisé en ce que ladite sélection bactérienne est un mélange de Serrathia et Kloebsiela en quantité égale.

3. Procédé selon l'une des revendications 1 ou 2, caractérisé en ce que ladite biomasse est élaborée à partir d'un mélange du lisier mis en suspension par addition en son sein d'un floculant naturel et du support carboné.

4. Procédé selon la revendication 3, caractérisé en ce que de l'amidon de maïs éclaté est utilisé pour la mise en suspension du lisier.

5. Procédé selon l'une quelconque des revendications 1 à 4, caractérisé en ce que ledit mélange contient de 55 à 65 % en poids d'un lisier à 12-15 % de matières sèches, mis en suspension et de 35 à 45 % en poids de support carboné.

6. Procédé selon l'une quelconque des revendications 1 à 5, caractérisé en ce que le support carboné est à base de paille, éventuellement en mélange avec de la sciure de bois vert.

7. Procédé selon l'une quelconque des revendications 1 à 6, caractérisé en ce que la biomasse contient, outre le lisier et le support carboné, des produits naturels assurant un apport en substances minérales.

8. Procédé selon la revendication 7, caractérisé en ce qu'on a réparti au sein dudit support carboné, avant son mélange avec le lisier :
    - du plâtre fin de construction,
    - du phosphate naturel calciné,
    - de la potasse naturelle,
    - du carbonate de calcium, de préférence magnésien, en quantités égales, le tout représentant de 10 à 25 % en poids, du mélange lisier - support carboné.

9. Procédé selon l'une quelconque des revendications 1 à 8, caractérisé en ce que, avant son ensemencement, la biomasse est soumise à un traitement thermique, aux environs de 70°C, pour abaisser son taux d'humidité à environ 40 %.

10. Procédé selon l'une quelconque des revendications 1 à 9, caractérisé en ce que l'ensemencement est réalisé par pulvérisation d'une solution aqueuse contenant les bactéries, sur la biomasse à environ 40 % d'humidité.

11. Procédé selon l'une quelconque des revendications 1 à 10, caractérisé en ce que, pendant son incubation, la biomasse est séquentiellement oxygénée.

12. Procédé selon l'une quelconque des revendications 1 à 11, caractérisé en ce que, après incubation, ladite biomasse est granulée sous pression.

13. Dispositif pour la mise en oeuvre du procédé selon l'une quelconque des revendications 1 à 12, caractérisé en ce qu'il comporte :
    - un mélangeur (3), alimenté d'une part en lisier floculé et d'autre part en support carboné;
    - un sécheur à lit fluidisé (10), avantageusement muni d'un dispositif de récupération des fines (11), pour soumettre le mélange -lisier, support carboné- à un traitement thermique ;
    - une enceinte (16) de pulvérisation d'une solution contenant les bactéries sur le mélange ;
    - des réacteurs ou emplacements de fermentation (18) munis d'un dispositif d'oxygénation (20) ;
    - une presse à granuler rotative.

6

EP 0 360 945 B1

**Claims**

1. Process for valorizing liquid pig manure by elaboration of biological improvements, said process comprising the fermentation of a biomass based on a mixture of liquid pig manure and a carbon-containing support, characterized in that said biomass is seeded by a bacterial selection including Serrathia and Kloebsiela.

2. Process according to claim 1, characterized in that said bacterial selection is a mixture of Serrathia and Kloebsiela in equal quantity.

3. Process according to one of claims 1 or 2, characterized in that said biomass is elaborated from a mixture of the liquid manure placed in suspension by addition therein of a natural flocculant and of the carbon-containing support.

4. Process according to claim 3, characterized in that burst Indian corn starch is used for placing the liquid manure in suspension.

5. Process according to any one of claims 1 to 4, characterized in that said mixture contains from 55 to 65% by weight of a liquid manure with 12-15% of dry matter, placed in suspension, and from 35 to 45% by weight of carbon-containing support.

6. Process according to any one of claims 1 to 5, characterized in that the carbon-containing support is based on straw, possibly mixed with green wood sawdust.

7. Process according to any one of claims 1 to 6, characterized in that the biomass contains, in addition to the liquid manure and the carbon-containing support, natural products ensuring a supply of mineral substances.

8. Process according to claim 7, characterized in that there is distributed within said carbon-containing support, before it is mixed with the liquid manure:
   - fine building plaster,
   - calcined natural phosphate,
   - natural potash,
   - calcium carbonate, preferably with magnesium, in equal quantities, the whole representing from 10 to 25% by weight of the liquid manure - carbon-containing support mixture.

9. Process according to any one of claims 1 to 8, characterized in that, before its seeding, the biomass is subjected to a heat treatment, at around 70°C, to lower its rate of humidity to about 40%.

10. Process according to any one of claims 1 to 9, characterized in that seeding is effected by pulverization of an aqueous solution containing the bacteria, on the biomass with about 40% of humidity.

11. Process according to any one of claims 1 to 10, characterized in that, during its incubation, the biomass is sequentially oxygenated.

12. Process according to any one of claims 1 to 11, characterized in that, after incubation, said biomass is granulated under pressure.

13. Device for carrying out the process according to any one of claims 1 to 12, characterized in that it comprises:
   - a mixer (3) supplied, on the one hand, with flocculated liquid manure and, on the other hand, with carbon-containing support;
   - a fluidized bed drier (10), advantageously provided with a fines recovery device (11) to subject the mixture - liquid manure, carbon-containing support - to a heat treatment;
   - an enclosure (16) for pulverization of a solution containing the bacteria on the mixture;
   - reactors or locations for fermentation (18) provided with an oxygenation device (20);
   - a rotary granulating press.

7

**Patentansprüche**

1. Verfahrung zur Verwertung von Schweinegülle durch Aufbereitung zu biologischem Dünger, welches Verfahren die Fermentation einer Biomasse auf Basis einer Mischung von Schweinegülle und einem Kohlenstoffträger umfaßt, dadurch gekennzeichnet, daß die Biomasse mit einer Bakterienselektion, umfassend Serratia und Klebsiella, beimpft wird.

2. Verfahren nach Anspruch 1, dadurch gekennzeichnet, daß die Bakterienselektion eine Mischung aus Serrathia und Klebsiella in gleicher Menge ist.

3. Verfahren nach einem der Ansprüche 1 oder 2, dadurch gekennzeichnet, daß die Biomasse aus einer in Suspension befindlichen Güllenmischung durch Zugabe eines natürlichen Flockungsmittels und des Kohlenstoffträgers aufbereitet wird.

4. Verfahren nach Anspruch 3, dadurch gekennzeichnet, daß zersprengte Maisstärke verwendet wird, um die Gülle in Suspension zu bringen.

5. Verfahren nach einem der Ansprüche 1 bis 4, dadurch gekennzeichnet, daß die Mischung 55 bis 65 Gew.% einer in Suspension befindlichen Gülle mit 12 bis 15 % Trockensubstanz und 35 bis 45 Gew.% Kohlenstoffträger enthält.

6. Verfahren nach einem der Ansprüche 1 bis 5, dadurch gekennzeichnet, daß der Kohlenstoffträger auf Stroh, gegebenenfalls in Mischung mit Spänen aus frischem Holz, basiert.

7. Verfahren nach einem der Ansprüche 1 bis 6, dadurch gekennzeichnet, daß die Biomasse neben der Gülle und dem Kohlenstoffträger natürliche Substanzen enthält, die eine Einbringung von Mineralstoffen gewährleisten.

8. Verfahren nach Anspruch 7, dadurch gekennzeichnet, daß im Kohlenstoffträger vor dessen Mischen mit der Gülle
   - feiner Baugips,
   - kalziniertes natürliches Phosphat,
   - natürliches Kalium,
   - vorzugsweise magnesiumhaltiges Calciumkarbonat,
   in gleichen Mengen verteilt worden ist, wobei das Ganze 10 bis 25 Gew.% der Mischung aus Gülle und Kohlenstoffträger ausmacht.

9. Verfahren nach einem der Ansprüche 1 bis 8, dadurch gekennzeichnet, daß die Biomasse vor dem Beimpfen einer Wärmebehandlung bei 70°C unterzogen wird, um ihren Feuchtigkeitsgehalt auf etwa 40 % zu senken.

10. Verfahren nach einem der Ansprüche 1 bis 9, dadurch gekennzeichnet, daß die Beimpfung durch Sprühen einer wässerigen, die Bakterien enthaltenden Lösung auf die Biomasse mit etwa 40 % Feuchtigkeit durchgeführt wird.

11. Verfahren nach einem der Ansprüche 1 bis 10, dadurch gekennzeichnet, daß die Biomasse während ihrer Inkubation sequentiell mit Sauerstoff angereichert wird.

12. Verfahren nach einem der Ansprüche 1 bis 11, dadurch gekennzeichnet, daß die Biomasse nach der Inkubation unter Druck granuliert wird.

13. Vorrichtung zur Durchführung des Verfahrens nach einem der Ansprüche 1 bis 12, dadurch gekennzeichnet, daß sie umfaßt:
    - einen Mischer (3), der einerseits mit geflockter Gülle und anderseits mit Kohlenstoffträger gespeist wird;
    - einen Fließbetttrockner (10) zur Wärmebehandlung der Mischung aus Gülle und Kohlenstoffträger, der vorteilhafterweise mit einer Einrichtung zur Rückgewinnung von Feinstoffen (11) versehen ist;

- einen Behälter (16) zum Aufsprühen einer die Bakterien enthaltenden Lösung auf die Mischung;
- Fermentationsreaktoren oder -stellen (18), die mit einer Einrichtung (20) zur Sauerstoffanreicherung versehen sind;
- eine drehbare Pelletpresse.